# EUROPEAN PATENT APPLICATION

(11) **EP 0 862 070 A1**
(43) Date of publication of application: **02.09.1998**
(21) Application number: 98103527.2
(22) Date of filing: 27.02.1998
(51) Int. Cl.: G02B 6/25, G02B 6/16, G02B 1/04

(54) **Method for processing plastic optical fiber**

(30) Priority: 28.02.1997 JP 45655/97
(71) Applicant: Asahi Glass Company Ltd., Chiyoda-ku, Tokyo 100-0005 (JP); FUJITSU LIMITED, Kawasaki-shi, Kanagawa 211-8588 (JP); KOIKE, Yasuhiro, Kanagawa 225-0024 (JP)
(72) Inventor: Koike, Yasuhiro, Yokohama-shi, Kanagawa (JP); Imai, Hajime, Fujitsu Limited, Kawasaki-shi, Kanagawa 211-8588 (JP); Sugiyama, Norihide, Asahi Glass Company Ltd., Kanagawa-ku, Yokohama-shi, Kanagawa (JP); Hatano, Hiroshi, Asahi Glass Company Ltd., Kanagawa-ku, Yokohama-shi, Kanagawa (JP)
(74) Representative: Müller-Boré & Partner Patentanwälte

(57) **Abstract**

A method for processing a plastic optical fiber, which comprises processing an end of the plastic optical fiber, wherein the end of the optical fiber is treated with a solvent to make the end surface a smooth flat surface or a smooth curved surface.

## Description

The present invention relates to a method for processing the end surface of a plastic optical fiber made of e.g. a fluorine-containing polymer.

Heretofore, quartz or an acrylic resin has been used as a raw material for an optical fiber. Such a raw material is a hard material having little plasticity, and it is accordingly common to carry out cutting by bending after imparting a scar on side surface or by imparting a scar to side surface while bending and then to carry out polishing to make the end surface of the fiber smooth and thereby to increase coupling efficiency from a light source or from a condenser lens into the fiber. However, a very high level of technique is required to polish a very small section such as the forward end of an optical fiber.

On the other hand, an optical fiber made of a fluorine-containing polymer disclosed in JP-A-8-5848 is excellent in the performance for transmitting near infrared light, which has not been accomplished by a conventional acrylic resin fiber, and it is thus useful as a plastic optical fiber for a short distance communication. However, the fluorine-containing polymer optical fiber is soft and susceptible to plastic deformation as compared with quartz or an acrylic resin, whereby it is difficult to obtain smoothness by polishing, as compared with the above-mentioned polishing of quartz or an acrylic resin, and there is an additional problem such that the abrasive material is likely to be embedded into the resin surface.

It is an object of the present invention to provide a method for processing the end surface of a plastic optical fiber, whereby the end surface of a plastic optical fiber made of a plastic material such as a fluorine-containing polymer, can easily be processed to be smooth, and the coupling efficiency to a light source or to a condenser lens can be increased.

The present inventors have conducted extensive studies on the basis of recognition of the above-mentioned problems and, as a result, have found that by treating the forward end of a plastic optical fiber made of a plastic material such as a fluorine-containing polymer, with a solvent which is capable of dissolving such a plastic, the end surface can be made smooth thereby to reduce the scattering loss of light due to the irregularities and to increase the coupling efficiency by improvement of the optical matching to a lens or a light source.

Thus, the present invention provides a method for processing a plastic optical fiber, which comprises processing an end of the plastic optical fiber, wherein the end of the optical fiber is treated with a solvent to make the end surface a smooth flat surface or a smooth curved surface.

Now, the present invention will be described in detail with reference to the preferred embodiments.

In the present invention, the plastic optical fiber is one wherein a part or whole of the cut surface in the fiber diameter direction is made of a plastic material. Accordingly, it may be an optical fiber made solely of a plastic material, or it may be an optical fiber containing a plastic material, such as an optical fiber comprising a core made of silica and a cladding made of a plastic material. Further, it may be a graded-index optical fiber or a step-index optical fiber.

The present invention is useful for a plastic material which is susceptible to plastic deformation, whereby a smooth cut surface is hardly obtainable by cutting, and it is particularly useful for a plastic material, of which at least a part is made of a fluorine-containing polymer.

A preferred plastic optical fiber in the present invention is a graded-index optical fiber. As such a refractive index distribution type optical fiber, preferred is a one which is made of a matrix resin and a diffusate, having different refractive indices, wherein the diffusate is distributed in the matrix resin with a concentration gradient in a certain specific direction. More preferred is a refractive index distribution type optical fiber made of a fluorine-type plastic material comprising a fluorine-containing polymer as the above matrix resin and a low molecular weight fluorine-type compound as the diffusate. In such a case, the number average molecular weight of the fluorine-containing polymer is preferably from 10,000 to 5,000,000, more preferably from 50,000 to 1,000,000. The number average molecular weight of the low molecular weight fluorine type compound is preferably from 300 to 10,000, more preferably from 300 to 5,000. Such a graded-index optical fiber is known, for example, by JP-A-8-5848.

The following description will be made with respect to a case where the plastic material for the plastic optical fiber is a fluorine-containing polymer.

The mechanism in the present invention, whereby the end surface of the optical fiber becomes flat by the treatment with a solvent, is not clearly understood. However, it is considered that the end surface becomes flat as it is dissolved in the solvent, or as it is swelled by the solvent.

In the present invention, the method for processing the end surface may, for example, be a method of immersing it in a solvent capable of dissolving the fluorine-containing polymer. Namely, by immersing and etching the end of a fiber cut by means of e.g. a cutter, the end surface as the cut surface can be smoothed. When immersed for from 1 to 10 minutes, or for from 10 sec to 10 minutes depending upon the conditions, the end surface may be flattened while substantially retaining the shape as cut. On the other hand, when immersed for from 10 to 60 minutes, the forward end portion becomes a curved surface, whereby it is possible to obtain a spherical forward end fiber wherein the end of the fiber serves as a lens. The cutter may, for example, be one comprising a fiber-holding means and a cutting means having a sharp blade.

Further, a method of polishing with the solvent is also useful. In a polishing machine for polishing the end surface of a quartz or silica fiber, it is common to use a polishing sheet impregnated with water for polishing. In the present invention, a solvent-impregnated polishing sheet is used, wherein a solvent is used instead of water. Here, polishing with the solvent is a method of polishing the end surface of optical fiber by means of the solvent-impregnated polishing sheet. In such a case, as the polishing sheet, it is possible to employ various materials including, for example, various non-woven fabrics or felts, and various wiping cloths made of e.g. polyurethane. The polishing sheet has a merit in that it is unnecessary to have an abrasive material composed of e.g. inorganic fine particles impregnated.

In the method for processing the end surface of the present invention, the treating temperature is not particularly limited so long as it is a temperature at which the solvent is liquid, and it is usually room temperature.

In the present invention, the fluorine-containing polymer as the plastic material for the optical fiber, is preferably a non-crystallizable fluorine-containing polymer having no C-H bond, more preferably a fluorine-containing polymer having a ring structure in its main chain. Preferred as the fluorine-containing polymer having a ring structure in its main chain, is a fluorine-containing polymer having a fluorine-containing aliphatic ring structure, a fluorine-containing imide ring structure, a fluorine-containing triazine ring structure or a fluorine-containing aromatic ring structure. The fluorine-containing polymer having a fluorine-containing aliphatic ring structure is more preferably one having a fluorine-containing aliphatic ether ring structure.

The fluorine-containing polymer having a fluorine-containing aliphatic ring structure is a particularly preferred polymer for such a reason that, as compared with a fluorine-containing polymer having a fluorine-containing imide ring structure, a fluorine-containing triazine ring structure or a fluorine-containing aromatic ring structure, polymer molecules tend to be hardly aligned even when formed into a fiber by thermal stretching or melt spinning which will be described hereinafter, whereby no scattering of light is likely to be brought about.

The polymer having a fluorine-containing aliphatic ring structure is preferably a polymer having a fluorine-containing aliphatic ring structure in its main chain obtainable by polymerizing a monomer having a fluorine-containing ring structure, or one obtainable by cyclic polymerization of a fluorine-containing monomer having at least two polymerizable double bonds.

The polymer having a fluorine-containing aliphatic ring structure in its main chain obtainable by polymerizing a monomer having a fluorine-containing aliphatic ring structure, is known, for example, by JP-B-63-18964. Namely, a polymer having a fluorine-containing aliphatic ring structure in its main chain can be obtained by homopolymerization of a monomer having a fluorine-containing aliphatic ring structure such as perfluoro(2,2-dimethyl-1,3-dioxole), or by copolymerization of such a monomer with a radical-polymerizable monomer such as tetrafluoroethylene, chlorotrifluoroethylene or perfluoro(methyl vinyl ether).

The polymer having a fluorine-containing aliphatic ring structure in its main chain obtainable by cyclic polymerization of a fluorine-containing monomer having at least two polymerizable double bonds, is known, for example, by JP-A-63-238111 or JP-A-63-238115. Namely, a polymer having a fluorine-containing aliphatic ring structure in its main chain can be obtained by cyclic polymerization of a monomer such as perfluoro(allyl vinyl ether) or perfluoro(butenyl vinyl ether), or by copolymerization of such a monomer with a radical-polymerizable monomer such as tetrafluoroethylene, chlorotrifluoroethylene or perfluoro(methyl vinyl ether).

Further, a polymer having a fluorine-containing aliphatic ring structure in its main chain may also be obtained by copolymerizing a monomer having a fluorine-containing aliphatic ring structure such as perfluoro(2,2-dimethyl-1,3-dioxole) with a fluorine-containing monomer having at least two polymerizable double bonds, such as perfluoro(allyl vinyl ether) or perfluoro(butenyl vinyl ether).

The above-mentioned polymer having a fluorine-containing aliphatic ring structure may, for example, be those having repeating units selected from the following formulae (I) to (IV). Fluorine atoms in such polymers having fluorine-containing aliphatic ring structures, may be partly substituted by chlorine atoms in order to increase the refractive index.

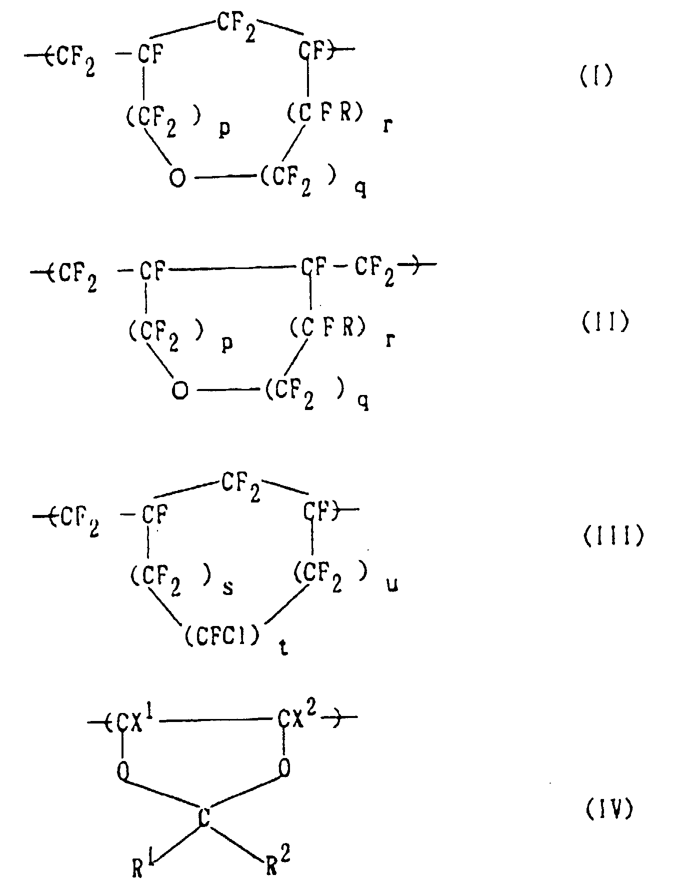

In the above formulae (I) to (IV), p is from 0 to 5, q is from 0 to 4, r is from 0 to 1, p+q+r is from 1 to 6, each of s, t and u is from 0 to 5, s+t+u is from 1 to 6, R is F or CF₃, R¹ is F or CF₃, R² is F or CF₃, X¹ is F or Cl, X² is F or Cl.

The polymer having a fluorine-containing aliphatic ring structure is preferably a polymer having the ring structure in its main chain. One having at least 20 mol%, preferably at least 40 mol%, of the polymer units having the ring structure, is preferred from the viewpoint of the transparency, mechanical properties, etc.

As the solvent to be used in the present invention, a fluorine-containing organic compound type solvent, particularly a perfluoroorganic compound type solvent, may be employed. For example, a fluorine-containing alkane compound such as perfluorohexane, perfluorooctane or perfluorodecane, a fluorine-containing alkylamine compound such as perfluorotripropylamine or perfluorotributylamine, a fluorine-containing cyclic ether compound such as perfluoro(2-butyltetrahydrofuran), or a fluorine-containing aromatic compound such as perfluorobenzene, may be mentioned. These solvents may be used in combination as a mixture of two or more of them.

These solvents may be selected for use depending upon the particular purpose, since they are different in volatility and the solubility of a fluorine-containing polymer. When used as an etching agent in the immersion of the end surface, a solvent having a relatively low boiling point is effective. In such a case, it has merits that the etching speed is relatively fast, and drying after the etching can be completed in a short period of time. In the case of the polishing method, it is preferred to employ a solvent having a relatively high boiling point so that volatilization during the polishing is little.

The method for processing the end surface of an optical fiber of the present invention is particularly suitable for treatment of the end surface of an optical fiber made of a fluorine-containing polymer, but it may likewise be applied to optical fibers made of other materials. As such other optical fibers, polymethyl methacrylate type, polystyrene type and polycarbonate type optical fibers may, for example, be mentioned.

Now, the present invention will be described in further detail with reference to Examples. However, it should be understood that the present invention is by no means restricted by such specific Examples.

### PREPARATION EXAMPLE 1

35 g of perfluoro(butenyl vinyl ether) (PBVE), 150 g of deionized water and 90 mg of ((CH₃)₂CHOCOO)₂ as a polymerization initiator, were charged into a pressure resistant glass autoclave having an internal capacity of 200 ml. The interior of the system was flushed three times with nitrogen, and then suspension polymerization was carried out at 40°C for 22 hours. As a result, a polymer having a number average molecular weight of about 1.5×10⁵ (hereinafter referred to as polymer A) was obtained in an amount of 28 g.

Polymer A had an intrinsic viscosity [η] of 0.50 at 30°C in perfluoro(2-butyltetrahydrofuran) (PBTHF). Polymer A had a glass transition point of 108°C, and it was a tough transparent glass-like polymer at room temperature. Its 10% thermal decomposition temperature was 465°C, the solubility parameter was 5.3 (cal/cm³)^{1/2}, and the refractive index was 1.34.

### PREPARATION EXAMPLE 2

Perfluoro(2,2-dimethyl-1,3-dioxole) (PDD) and tetrafluoroethylene were subjected to radical polymerization in a weight ratio of 80:20 to obtain a polymer having a glass transition point of 160°C and a number average molecular weight of about 5×10⁵ (hereinafter referred to as polymer B). Polymer B was colorless transparent, and its refractive index was 1.3, and the light transmittance was high.

Further, PDD and chlorotrifluoroethylene (CTFE) were subjected to radical polymerization in a weight ratio of 75:25 to obtain a polymer having a glass transition point of 150°C and a number average molecular weight of about 3×10⁵ (hereinafter referred to as polymer C). Polymer C was colorless transparent, and its refractive index was 1.4, and the light transmittance was high.

### PREPARATION EXAMPLE 3

80 g of PBVE, 2 g of PDD, 10 g of PBTHF and 20 mg of ((CH₃)₂CHOCOO)₂ as a polymerization initiator, were charged into a pressure resistant glass ampule having an internal capacity of 50 ml. The interior of the system was flushed three times with nitrogen, and then polymerization was carried out at 40°C for 20 hours. As a result, 6.7 g of a transparent polymer having a number average molecular weight of about 2×10⁵ (hereinafter referred to as polymer D) was obtained.

Polymer D had a glass transition point of 157°C and a refractive index of 1.32, and the content of polymer units of PDD was obtained from the absorbance at 1,930 cm⁻¹ in the IR spectrum and found to be 12 wt%.

### EXAMPLE 1

Polymer A obtained as described above, was dissolved in a PBTHF solvent, and 12 wt% of 1,3-dibromotetrafluorobenzene (DBTFB) having a refractive index of 1.52 and a difference in the solubility parameter from polymer A being 3.2 (cal/cm³)^{1/2}, was added to obtain a mixed solution. The solvent was removed from this solution to obtain a transparent mixed polymer (hereinafter referred to as polymer E).

Polymer A was melted, and while pouring molten polymer E at its center, melt spinning was carried out at 300°C to obtain an optical fiber in which the refractive index gradually lowers from the center towards the periphery.

This optical fiber was cut by a razor, and the forward end was immersed in PBTHF for 5 minutes. The end surface was inspected by a microscope and found to be flat, as the trace of razor abrasion observed before the etching, had disappeared.

The following evaluation was carried out to evaluate the coupling loss by the end surface of this fiber.

Namely, light emitted from a quartz or silica fiber having its end surface polished and smoothed, was received by a test fiber, whereby the light intensity was measured. At that time, the distance between the end surface of the quartz or silica fiber on the light source side and the end surface of the test fiber abutted, was 20 µm. The abutting positions of the two fibers were changed little by little, whereby from the value obtained when the light intensity became highest, the coupling loss was obtained and found to be 0.4 dB. For the purpose of comparison, the coupling loss in a case where no etching with the solvent was carried out, was measured and found to be 2 dB.

### EXAMPLE 2

Equal amounts of polymer B and polymer C prepared as described above, were dissolved and mixed in a PBTHF solvent. The solvent is removed therefrom to obtain a transparent polymer mixture (B+C). Polymer B was melted, and while pouring the molten polymer mixture (B+C) to the inside thereof and molten polymer C further at the center, melt spinning was carried out to obtain an optical fiber wherein the refractive index gradually decreases from the center to the periphery.

This optical fiber was cut by a razor, and the fiber end was immersed in PBTHF for 5 minutes. The end surface was inspected by a microscope and found to be flat as the trace of razor abrasion observed before the etching, had disappeared.

Using this fiber, the same evaluation as in Example 1 was carried out, whereby the coupling loss by the end surface of the fiber was 0.4 dB.

### EXAMPLE 3

An optical fiber was prepared in the same manner as in Example 1 except that instead of using 12 wt% of DBTFB, 30 wt% of a CTFE oligomer having a number average molecular weight of 800 was used. This oligomer had a refractive index of 1.41, and the difference in the solubility parameter from polymer A was 1.4 (cal/cm³)^{1/2}. In the obtained optical fiber, the refractive index was found to be gradually decreased from the center towards the periphery.

This optical fiber was cut by a razor, and the fiber end was immersed in PBTHF for 5 minutes. The end surface was inspected by a microscope and found to be flat, as the trace of razor abrasion observed before the etching, had disappeared.

Using this fiber, the same evaluation as in Example 1 was carried out, whereby the coupling loss by the end surface of the fiber was 0.4 dB.

### EXAMPLE 4

An optical fiber comprising a core made of polymer D and a clad made of polymer A, was prepared by a melt-spinning method. This optical fiber was cut by a razor, and the forward end was immersed in PBTHF for 30 minutes. As a result, the fiber end became a smooth spherical surface and found to be excellent in condensing light emitted from the fiber to a light-receiving element.

### EXAMPLE 5

An optical fiber comprising a core made of polymer D and a cladding made of polymer A, was prepared by a melt-spinning method. This optical fiber was cut by a razor, and the end surface was polished by a polishing sheet using perfluorotributylamine as a polishing solvent. The end surface was inspected by a microscope and found to be flat, as the trace of razor abrasion observed before the etching, had disappeared.

Using this fiber, the same evaluation as in Example 1 was carried out, whereby the coupling loss by the end surface of the fiber was 0.4 dB.

By the treatment of the fiber end of a plastic optical fiber made of e.g. a fluorine-containing polymer, the cut surface can be processed to a smooth flat surface or a smooth curved surface such as a spherical surface, whereby the coupling efficiency can readily be increased at the time of incidence of light to the optical fiber from a light source such as LD (laser diode) or LED (light emission diode), or at the time of emission of light from the optical fiber to a light-receiving element such as PD (photo diode).

## Claims

1. A method for processing a plastic optical fiber, which comprises processing an end of the plastic optical fiber, wherein the end of the optical fiber is treated with a solvent to make the end surface a smooth flat surface or a smooth curved surface.

2. The method for processing a plastic optical fiber according to Claim 1, wherein the end surface of the forward end of the optical fiber is a cut surface formed by cutting the plastic optical fiber by a cutter.

3. The method for processing a plastic optical fiber according to Claim 1 or 2, wherein the treatment is carried out by immersing the end of the plastic optical fiber in the solvent.

4. The method for processing a plastic optical fiber according to Claim 1 or 2, wherein the treatment is carried out by polishing the end surface of the forward end of the plastic optical fiber with the solvent.

5. The method for processing a plastic optical fiber according to any one of Claims 1 to 4, wherein the plastic optical fiber is a graded-index optical fiber or a step-index optical fiber.

6. The method for processing a plastic optical fiber according to any one of Claims 1 to 5, wherein the plastic material for the plastic optical fiber is a fluorine-containing polymer.

7. The method for processing a plastic optical fiber according to any one of Claims 1 to 5, wherein the plastic material for the plastic optical fiber is a fluorine-containing polymer, and the solvent is a fluorine-containing organic compound type solvent.

8. The method for processing a plastic optical fiber according to Claim 7, wherein the fluorine-containing organic compound type solvent is a perfluoroorganic compound type solvent.

9. The method for processing a plastic optical fiber according to Claim 6, 7 or 8, wherein the fluorine-containing polymer is a non-crystallizable fluorine-containing polymer having no C-H bond.

10. A plastic optical fiber obtained by the method as defined in any one of Claims 1 to 9.
